# EUROPEAN PATENT SPECIFICATION

(11) **EP 3 948 395 B1**
(45) Date of publication and mention of the grant of the patent: **23.08.2023**
(21) Application number: 20708499.7
(22) Date of filing: 06.03.2020
(51) Int. Cl.: G02B 27/01, B60K 35/00, G02B 7/182

(54) **APPARATUS COMPRISING A MIRROR FIXED TO A HOUSING BY A FIXATION DEVICE**
VORRICHTUNG MIT EINEM DURCH EINE BEFESTIGUNGSVORRICHTUNG AN EINEM GEHÄUSE BEFESTIGTEN SPIEGEL
APPAREIL COMPRENANT UN MIROIR FIXÉ À UN BOÎTIER PAR UN DISPOSITIF DE FIXATION

(30) Priority: 03.04.2019 EP 19465520; 04.04.2019 DE 102019204853
(43) Date of publication of application: 09.02.2022
(73) Proprietor: Continental Automotive Technologies GmbH, 30165 Hannover (DE)
(72) Inventor: BALEAN, Dan Mihai, 65824 Schwalbach a. Ts. (DE)
(74) Representative: Continental Corporation
(86) International application number: PCT/EP2020/056105
(87) International publication number: WO 2020/200658

(56) References cited:
- EP-A1- 3 232 250
- EP-A1- 3 276 394
- FR-A1- 3 023 926
- US-A1- 2017 371 158

## Description

The present invention is related to an apparatus for generating a virtual image. The invention is further related to a vehicle comprising such an apparatus.

As an example of an apparatus for generating a virtual image, a head-up display, also referred to as a HUD, is known as a tool for displaying information in the field of vision of a driver. The driver can therefore maintain his viewing direction. While such systems, due to their complexity and costs, were originally mainly used in the aviation sector, they are now also being used in large scale in the automotive sector.

A head-up display device usually comprises a big aspherical mirror and a small mirror, which are typically arranged in a common housing assembly, which may also include electronic components necessary for operation of the head-up display. The housing assembly helps to simplify mounting of the head-up display in a vehicle, as all necessary components can be installed in a single production step. To generate a virtual image on the windscreen of a vehicle, the image is first created by an LCD display and is projected on the small mirror, reflected to the bigger mirror and then from there projected on the windshield so that it can be seen by the driver. The big mirror is glued in place inside the housing with hot melt in order to keep it stable and to reduce the effect of vibrations on the mirror. This however means that the mirror cannot be removed after it has been placed in position. In case a replacement of the mirror is needed, the whole apparatus or at least the part of the housing containing the big mirror as well as other components needs to be disposed of, which is expensive and inefficient.

US 2017/0371158 A1 discloses an apparatus according to the pre-characterizing part of claim 1.

It is an object of the present invention to provide an improved solution for an apparatus for generating a virtual image that avoids the mentioned disadvantages.

This object is achieved by an apparatus according to claim 1. The dependent claims include advantageous further developments and improvements of the present principles as described below.

According to one aspect of the invention, an apparatus for generating a virtual image comprises a housing and a mirror, wherein the mirror is arranged inside the housing, such that an image received by the mirror is reflected to create the virtual image, preferably directly without any further mirrors in between, wherein the mirror is fixed to the housing by at least one fixation device and wherein the fixation device is configured for the mirror to be detachable from the housing.

The mirror is preferably the big mirror, in other words it is configured to directly project an image on the windshield of a vehicle without any intermediary means. In the context of the description and claims, the word mirror is preferably to be understood as the combination of mirror and a casing of the mirror. The housing or housing part of the apparatus to which the mirror is fixed can be rotatable to allow for rotation of the mirror. Being detachable, the mirror can simply be removed from the housing independently from any other components of the apparatus, which could for example be advantageous if the mirror was broken and needed replacement. The fixation device furthermore has the effect that the assembly process of the apparatus becomes more customizable, since the time and place for the attachment of the mirror is not as determined as with a hot melting process.

The fixation device comprises a body part and a clipping part, wherein the clipping part is configured to snap back and interlock with the body part after being elastically deformed. The clipping part preferably comprises a curved or edged form. In this case it is sufficient if only the curved or edged part is elastically deformed to allow for a "snap-in-movement" of the clipping part. The two-part structure of the fixation device is cost-effective and combined with the clip-in or snap-in function it is easy to handle. Therefore, opening or closing the fixation device and thereby attaching or detaching the mirror can be done in an economical way.

The clipping part comprises two engagement points with the body part, wherein one of the engagement points is an aperture and one is a protrusion. This way the protrusion of the clipping part can be hooked in at one side and provide a counter force when the clipping part is deformed elastically. When the force causing the deformation is removed, the clipping part snaps back and the aperture encloses for example a protrusion of the body part, so that both parts are interlocked.

The body part comprises engagement points corresponding to the ones of the clipping part. Therefore, for example a protrusion engages with an aperture and vice versa.

In a preferred embodiment, the clipping part is flat and made of metal, which particularly preferred is austenitic stainless steel.

The body part is fixated to the housing by an expansion anchor, wherein the expansion anchor comprises at least two, preferably four, elastic fingers, that are configured to snap back and interlock with a corresponding opening in the housing after being elastically deformed. An expansion anchor is preferably understood as a fixation device that after being pushed through a borehole or similar expands on the other side to prevent any pull back movement.

The mirror comprises a protrusion at one of its edges, which is at least partially enclosed by the fixation device. According to a further preferred embodiment, the fixation device forms a clamp that fully encloses the protrusion. The protrusion and the counterpart of the fixation device preferably have a rectangular shape.

It is advantageous if at each of two opposing edges the mirror comprises one protrusion, which is fully or at least partially enclosed by a fixation device. This arrangement allows for the mirror to stay stable and secure inside the housing while it is also detachable.

It is preferred that the mirror is an aspheric mirror. This helps to achieve a distortion-free virtual image on a windshield that is shaped in a certain way.

In a preferred embodiment the apparatus comprises an image generator, preferably an LCD display, for generating an image to be received by the mirror and a partially reflecting, translucent pane, preferably a windshield, for receiving the image reflected from the mirror and displaying the virtual image.

The apparatus is preferably a head-up display for generating a virtual image on a windscreen of a vehicle.

According to another aspect of the invention, a vehicle comprises an apparatus for generating a virtual image as described above.

It should be noted that, although the appended claims are related to an apparatus for generating a virtual image / a vehicle, the invention is also related to a fixation device with features as described above and below, which the applicant herewith declares can be claimed independently from an apparatus / vehicle.

Further features of the present invention will become apparent from the following description and the appended claims in conjunction with the figures.
- Fig. 1a: shows a sideview of a body part of a fixation device for an apparatus for generating a virtual image,
- Fig. 1b: shows a front view of the body part of Fig. 1a,
- Fig. 1c: shows a bottom view of the body part of Fig. 1a and 1b,
- Fig. 2a: shows a perspective view of a clipping part of a fixation device for an apparatus for generating a virtual image,
- Fig. 2b: shows a sideview of the body part of Fig. 2a,
- Fig. 2c: shows a front view of the body part of Fig. 2a and 2b,
- Fig. 3a: shows a perspective view of a fixation device for an apparatus for generating a virtual image,
- Fig. 3b: shows a sideview of the fixation device of Fig. 3a,
- Fig. 3c: shows a front view of the fixation device of Fig. 3a and 3b,
- Fig. 4: shows a perspective view of an apparatus for generating a virtual image before the mirror is fixed to the housing by two fixation devices,
- Fig. 5: shows a perspective view of the apparatus of Fig. 4 after the mirror is fixed to the housing by two fixation devices,
- Fig. 6: shows a sketch of the operation of a head-up display.

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

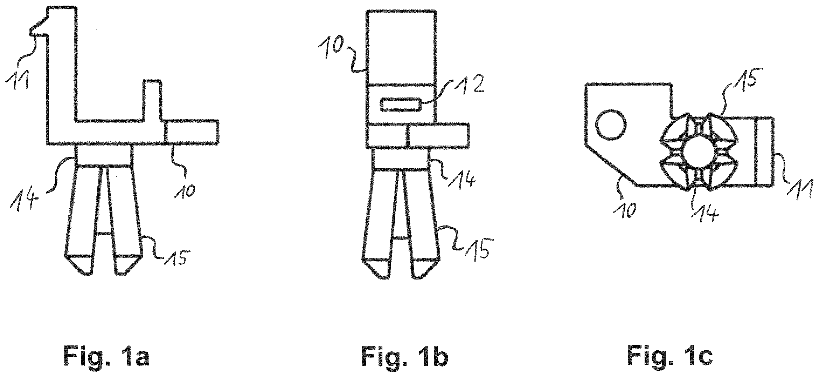

Fig. 1a shows the body part 10 of a fixation device 2 according to one embodiment of the invention. It is made of a synthetic material and comprises an expansion anchor 14 with four elastic fingers 15. To attach the fixation device 2 to a housing 1 or housing structure of a head-up display, the expansion anchor 14 is passed through an aperture in the housing 1 while the fingers 15 of the expansion anchor 14 are compressed by the edges of the aperture. When they have passed the aperture, the fingers 15 snap back and interlock with the housing 1 to hold the fixation device 2 in place. Additionally, and for rotational fixation, the body part 10 comprises a borehole that allows for a screw connection with the housing.

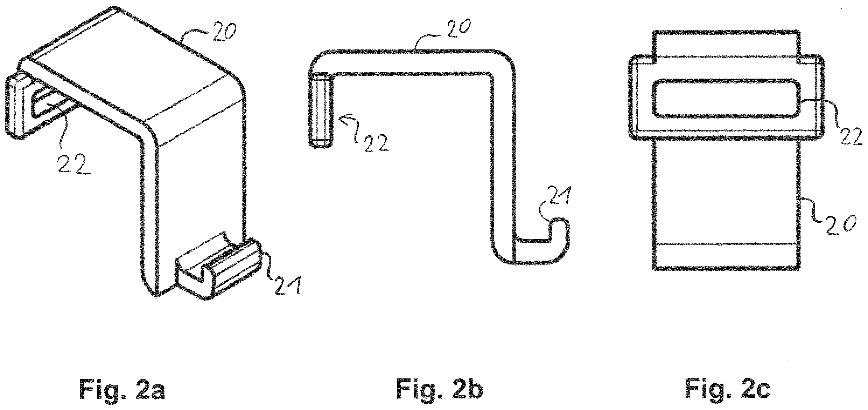

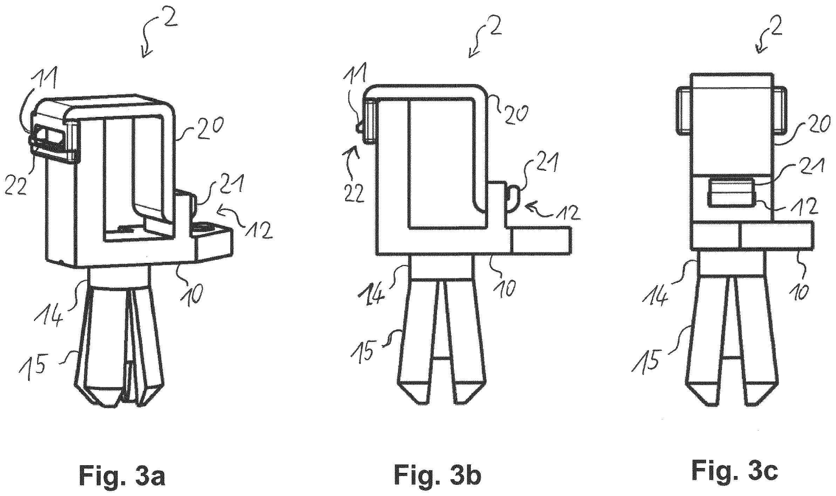

The body part 10 also comprises a strip-like flat plate with a rectangular shape when viewed from the side. The plate has a protrusion 11 at one end and an aperture 12 at the other end. Those serve as engagement points for a clipping part 20, which is described in more detail in connection with Figs. 2 and 3.

The aperture 12 can be seen better from Fig. 1b, which is a front view of the body part 10. It is shaped as an elongated rectangle to provide a stable connection with the clipping part 20. The four fingers 15 of the expansion anchor can best be seen from Fig. 1c, which is a bottom view of the body part 10.

The clipping part 20 of the fixation device is shown in a perspective view in Fig. 2a. Just like the body part 10, it comprises a strip-like flat plate with a rectangular shape when viewed from the side. At one side it has a protrusion 21 which is shaped like a hook in the direction of the protrusion 21 and which has a cross-section in the form of an elongated rectangle. This hook-like protrusion 21 engages with the aperture 12 of the body part. To fully close the space between body and clipping part 10, 20, the clipping part 20 has to be bent elastically by applying an external force. This allows the clipping part 20 to snap in at the other end, thereby creating a press-fit connection with the mirror 32 or a protrusion thereof respectively. For this reason, the other end comprises an aperture 22, which protrudes rectangularly from the flat plate. The aperture is formed in such a way that it can take in the corresponding protrusion 11 of the body part. Front and side view of the clipping part are shown in Figs. 2b and 2c.

As can be seen from Figs. 3a and 3b, the two parts of the fixation device 2 provide a more or less rectangular space to mount the mirror 32 in a press-fit way. Figs. 3b and 3c show how the hook-like protrusion 21 of the clipping part engages with the body part 10 in a secure manner. To detach the mirror 32 from the housing 1 to which the fixation device 2 is mounted, the clipping part 20 simply needs to be elastically deformed in such a way that at one of the engagement points the protrusion 11, 21 snaps out of the aperture 12, 22, so that the clipping part can be moved away from the body part 10, thereby releasing the mirror 32 or a protrusion thereof respectively.

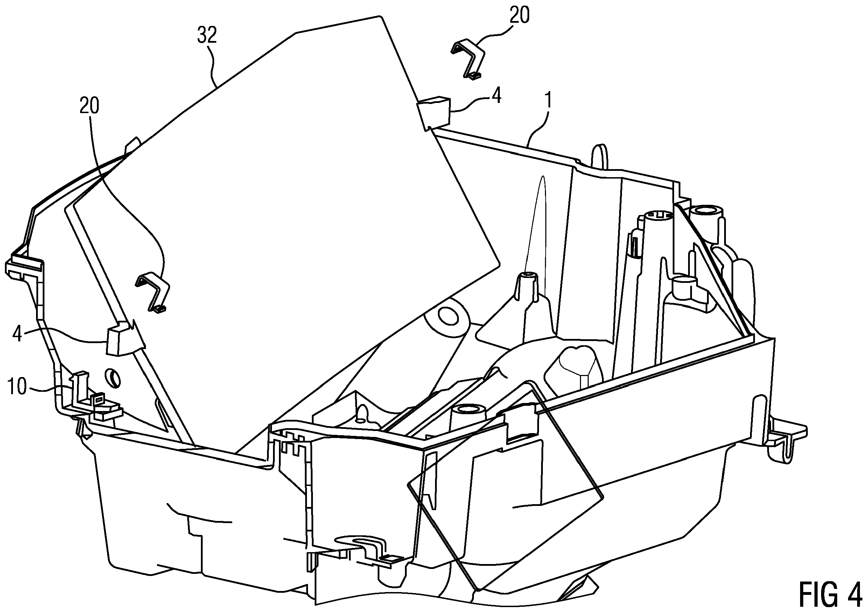

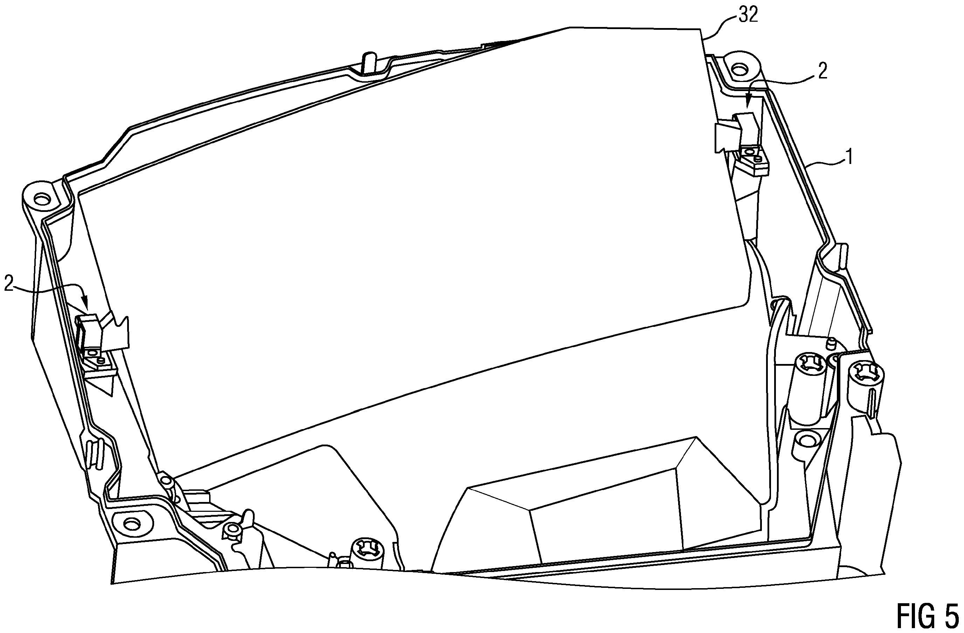

Fig. 4 shows an embodiment of the invention where the mirror 32 has one protrusion 4 at each of two opposite edges of the casing. These protrusions 4 each fit into a fixation device 2 as described above, where they are held in place. In case the mirror 32 needs to be replaced, the clipping part 20 can be detached from the body part 10 at just one or at both engagement points so that the mirror 32 can be moved away from the housing 1. Fig. 4 shows an exploded view or a view of the attachment / detachment process respectively. The apparatus with the attached mirror is shown in Fig. 5.

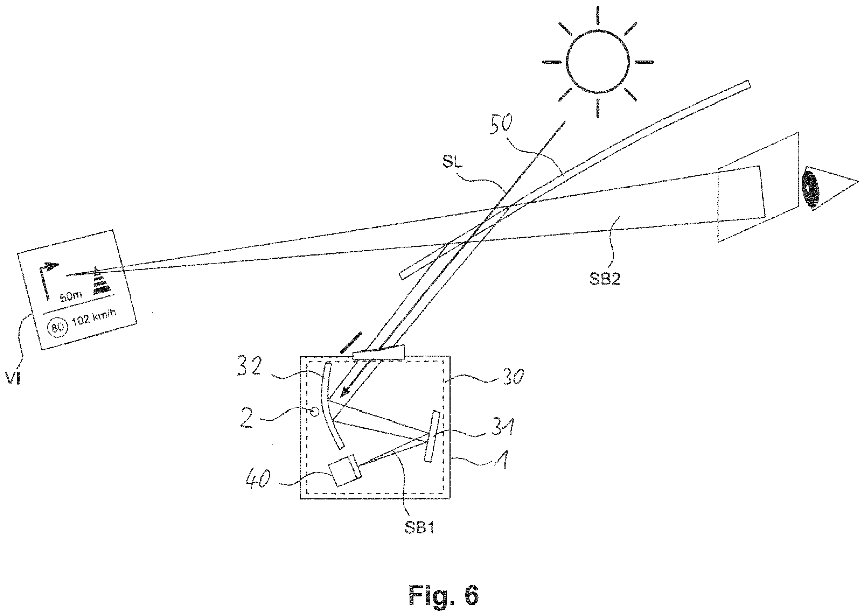

Fig. 6 shows a sketch of an apparatus for generating a virtual image in the form of a head-up display for a motor vehicle. The head-up display has an image generator 40, an optical unit 30 and a partially reflecting, translucent pane 50. A beam SB1 emanates from a display element of the image generator 40 and is reflected by a folding mirror 31 onto the aspheric mirror 32, which reflects it in the direction of the pane 50, which here is a windscreen of a motor vehicle. From there, the SB2 beam is directed towards the eye of an observer.

The observer sees a virtual image VI, which is located outside the vehicle above the bonnet or even in front of the vehicle. Due to the interaction of the optical unit 30 and the pane 50, the virtual image VI is an enlarged representation of the image displayed by the display element. Here a symbolic speed limit, the current vehicle speed and navigation instructions are displayed. As long as the eye is inside the eyebox indicated by a rectangle in the sketch, all elements of the virtual image are visible to the eye. If the eye is located outside the eyebox, the virtual image VI is only partially or not at all visible to the viewer. The larger the eyebox is, the less restricted the viewer is in his choice of the seating position.

The curvature of the aspheric mirror 32 is adapted to the curvature of the windscreen and ensures that the image distortion is stable over the entire eyebox. The aspheric mirror 32 is fixed to the housing of the head-up display by two fixation devices 2 as described above. The folding mirror 31 ensures that the distance travelled by the beam SB1 between the display element of the image generator and the aspheric mirror 32 is long, while at the same time the optical unit 30 remains compact. The optical unit 30 and the image generator 40 are accommodated in a housing assembly 1 and separated from the environment by a transparent cover. The optical elements of the optical unit 30 are thus protected, for example, against dust inside the vehicle. An optical foil or polarizer is located on the cover. The display element is typically polarized and the mirror pane 50 acts like an analyzer. The purpose of the polarizer is, therefore, to influence the polarization such as to achieve a uniform visibility of the useful light. An anti-glare shield serves to securely absorb light reflected across the interface of the cover so that no glare is caused to the observer. In addition to sunlight SL, also light from another source of interference might reach the display element of the image generator 40. In combination with a polarization filter, the polarizer can also be used to suppress incident sunlight SL.

The housing 1 of the head-up display may comprise an upper housing and a lower housing fastened together by spring clips. This way the apparatus can be dismantled in a quick and easy way which thanks to the described fixation devices 2 also includes the aspheric mirror 32.

## Claims

1. Apparatus for generating a virtual image, comprising a housing (1) and a mirror (32), wherein the mirror (32) is arranged inside the housing (1), such that an image received by the mirror (32) is reflected to create the virtual image, wherein the mirror (32) is fixed to the housing (1) by at least one fixation device (2) and wherein the fixation device (2) is configured for the mirror (32) to be detachable from the housing (1), wherein the fixation device comprises a body part (10) and a clipping part (20), wherein the clipping part (20) is configured to snap back and interlock with the body part (10) after being elastically deformed, and, wherein at one of its edges the mirror (32) comprises a protrusion (4), which is at least partially enclosed by the fixation device (2), **characterized in that** the clipping part (20) comprises two engagement points with the body part (10), wherein one of the engagement points is an aperture (22) and one is a protrusion (21), wherein the body part (10) comprises engagement points corresponding to the ones of the clipping part (20), and wherein the body part (10) is fixated to the housing (1) by an expansion anchor (14), wherein the expansion anchor (14) comprises at least two, preferably four, elastic fingers (15), that are configured to snap back and interlock with a corresponding opening in the housing (1) after being elastically deformed

2. Apparatus according to claim 1, wherein the clipping part (20) is flat and made of metal, preferably austenitic stainless steel.

3. Apparatus according to one of the preceding claims, wherein at each of two opposing edges the mirror (32) comprises one protrusion (4), which is at least partially enclosed by a fixation device (2).

4. Apparatus according to one of the preceding claims, wherein the mirror (32) is an aspheric mirror (32).

5. Apparatus according to one of the preceding claims, comprising an image generator (40) for generating an image to be received by the mirror (32) and a partially reflecting, translucent pane (50) for receiving the image reflected from the mirror (32) and displaying the virtual image.

6. Apparatus according to one of the preceding claims, wherein the apparatus is a head-up display for generating a virtual image on a windscreen of a vehicle.

7. A vehicle comprising an apparatus for generating a virtual image according to one of the preceding claims.

## Patentansprüche

1. Vorrichtung zum Generieren eines virtuellen Bildes, aufweisend ein Gehäuse (1) und einen Spiegel (32), wobei der Spiegel (32) innerhalb des Gehäuses (1) angeordnet ist, so dass ein durch den Spiegel (32) empfangenes Bild reflektiert wird, um das virtuelle Bild zu erzeugen, wobei der Spiegel (32) mittels mindestens einer Befestigungsvorrichtung (2) an dem Gehäuse (1) befestigt ist, und wobei die Befestigungsvorrichtung (2) so ausgebildet ist, dass der Spiegel (32) von dem Gehäuse (1) abnehmbar ist, wobei die Befestigungsvorrichtung ein Körperteil (10) und ein Klemmteil (20) aufweist, wobei das Klemmteil (20) ausgebildet ist, um zurückzuschnappen und mit dem Körperteil (10) zu verriegeln, nachdem es elastisch verformt wurde, und wobei der Spiegel (32) an einem seiner Ränder einen Vorsprung (4) aufweist, der mindestens teilweise von der Befestigungsvorrichtung (2) umschlossen wird, **dadurch gekennzeichnet, dass** das Klemmteil (20) zwei Eingriffpunkte mit dem Körperteil (10) aufweist, wobei einer der Eingriffpunkte ein Durchbruch (22) ist und einer ein Vorsprung (21) ist, wobei das Körperteil (10) Eingriffpunkte aufweist, die denjenigen des Klemmteils (20) entsprechen, und wobei das Körperteil (10) an dem Gehäuse (1) durch einen Spreizanker (14) befestigt ist, wobei der Spreizanker (14) mindestens zwei, vorzugsweise vier elastische Finger (15) aufweist, die ausgebildet sind, um zurückzuschnappen und mit einer entsprechenden Öffnung in dem Gehäuse (1) zu verriegeln, nachdem sie elastisch verformt wurden.

2. Vorrichtung nach Anspruch 1, wobei das Klemmteil (20) flach ist und aus Metall gefertigt ist, vorzugsweise aus austenitischem rostfreiem Stahl.

3. Vorrichtung nach einem der vorhergehenden Ansprüche, wobei der Spiegel (32) an jedem der zwei gegenüber liegenden Ränder einen Vorsprung (4) aufweist, der mindestens teilweise von einer Befestigungsvorrichtung (2) umschlossen ist.

4. Vorrichtung nach einem der vorhergehenden Ansprüche, wobei der Spiegel (32) ein asphärischer Spiegel (32) ist.

5. Vorrichtung nach einem der vorhergehenden Ansprüche, aufweisend einen Bildgenerator (40) zum Generieren eines Bildes, das von dem Spiegel (32) empfangen werden soll, und einer teilreflektierenden durchscheinenden Scheibe (50) zum Empfangen des von dem Spiegel (32) reflektierten Bildes und Anzeigen des virtuellen Bildes.

6. Vorrichtung nach einem der vorhergehenden Ansprüche, wobei die Vorrichtung eine Headup-Anzeige zum Generieren eines virtuellen Bildes auf einer Windschutzscheibe eines Fahrzeugs ist.

7. Fahrzeug, aufweisend eine Vorrichtung zum Generieren eines virtuellen Bildes gemäß einem der vorhergehenden Ansprüche.

## Revendications

1. Appareil permettant de générer une image virtuelle, comprenant un boîtier (1) et un miroir (32), dans lequel le miroir (32) est agencé à l'intérieur du boîtier (1), de telle sorte qu'une image reçue par le miroir (32) soit réfléchie pour créer l'image virtuelle, dans lequel le miroir (32) est fixé au boîtier (1) par au moins un dispositif de fixation (2) et dans lequel le dispositif de fixation (2) est conçu pour que le miroir (32) puisse être détaché du boîtier (1), dans lequel le dispositif de fixation comprend une partie corps (10) et une partie d'attache (20), dans lequel la partie d'attache (20) est conçue pour s'encliqueter et s'emboîter avec la partie corps (10) après avoir été déformée élastiquement, et, dans lequel au niveau de l'un de ses bords le miroir (32) comprend une protubérance (4), qui est au moins partiellement enfermée par le dispositif de fixation (2), **caractérisé en ce que** la partie d'attache (20) comprend deux points de mise en prise avec la partie corps (10), dans lequel l'un des points de mise en prise est une ouverture (22) et l'autre une protubérance (21), dans lequel la partie corps (10) comprend des points de mise en prise correspondant à ceux de la partie d'attache (20), et dans lequel la partie corps (10) est fixée au boîtier (1) par une ancre d'expansion (14), dans lequel l'ancre d'expansion (14) comprend au moins deux, de préférence quatre, doigts élastiques (15), qui sont conçus pour s'encliqueter et s'emboîter avec une ouverture correspondante dans le boîtier (1) après avoir été déformés élastiquement.

2. Appareil selon la revendication 1, dans lequel la partie d'attache (20) est plate et réalisée en métal, de préférence en acier inoxydable austénitique.

3. Appareil selon l'une des revendications précédentes, dans lequel au niveau de chacun des deux bords opposés, le miroir (32) comprend une protubérance (4), qui est au moins partiellement enfermée dans un dispositif de fixation (2).

4. Appareil selon l'une des revendications précédentes, dans lequel le miroir (32) est un miroir asphérique (32).

5. Appareil selon l'une des revendications précédentes, comprenant un générateur d'image (40) permettant de générer une image devant être reçue par le miroir (32) et une vitre translucide partiellement réfléchissante (50) pour recevoir l'image réfléchie depuis le miroir (32) et afficher l'image virtuelle.

6. Appareil selon l'une des revendications précédentes, l'appareil étant un affichage tête haute permettant de générer une image virtuelle sur le pare-brise d'un véhicule.

7. Véhicule comprenant un appareil permettant de générer une image virtuelle selon l'une des revendications précédentes.
